# EUROPEAN PATENT SPECIFICATION

(11) **EP 1 365 163 B1**
(45) Date of publication and mention of the grant of the patent: **11.01.2012**
(21) Application number: 03010243.8
(22) Date of filing: 07.05.2003
(51) Int. Cl.: F16C 19/52, B61K 9/04, G01P 3/44, G01K 1/14

(54) **Railway bearing assembly with a sensor screw for continuous monitoring of the working temperature of the bearing**
Lageranordnung eines Eisenbahnfahrzeugs mit einem Mess-Schraubbolzen zur ständigen Überwachung der Arbeitstemperatur des Lagers
Disposition de palier d'un véhicule ferroviaire avec dispositif de contrôle continu de la température d'opération de palier

(30) Priority: 24.05.2002 IT TO20020108 U
(43) Date of publication of application: 26.11.2003
(73) Proprietor: SKF INDUSTRIE S.p.A., 10121 Torino (IT)
(72) Inventor: Moretti, Roberto, 10020 Cambiano (TO) (IT); Sema, Silvano, 10060 Cercenasco (TO) (IT); Genero, Matteo, 10026 Santena (TO) (IT)
(74) Representative: Fioravanti, Corrado

(56) References cited:
- EP-A- 0 571 875
- EP-A- 1 211 500
- WO-A-96/02903
- US-A- 5 438 322
- US-A- 5 633 628
- US-A- 6 161 962

## Description

The present invention refers to a railway bearing assembly with a device for the continuous monitoring of the working temperature of a railway bearing.

Generally, in order to monitor the temperature of railway bearings, or rather the bearings which are installed onto the axles of railway carriages, monitoring devices of a well-known type are used, which are distributed along the railway lines at substantially regular distances one from the other, and which comprise an infrared sensor for reading the temperature of the bearing, and a transmission system for transmitting the data which has been read by the sensor to a central receiving unit which is arranged in a railway station.

Monitoring devices of the kind which have just been described present some disadvantages which have a detrimental effect on the reliability of the readings obtained as well as on overall efficiency.

In fact, the increase in the working temperature of the bearing itself is caused by conditions which are at the very limit of its operative effectiveness to such a point that there is a progressive deterioration of the bearing itself, and such conditions can worsen rapidly over a period of time which is less than that which the railway carriage takes to travel the distance between two consecutive monitoring devices. As the deterioration of a bearing can lead to the derailment of the railway carriage, it is obvious from the above description that the distribution of the monitoring devices does not conform in the least to the safety standards required for the secure circulation of the railway carriages themselves.

Furthermore, the monitoring takes place in an extremely short time, and it concerns above all those mechanical parts which are subject to heating as a result of the induction of the bearing and cooling as a result of dissipation due to the motion of the carriage, so it is not possible to evaluate precisely the effective values of the working temperature of the bearing, which means that it is impossible to forecast the eventual deterioration of the bearing itself within a reliable safety margin.

With the aim of overcoming the disadvantages described above, the most up-to-date kinds of bearings for railway axles have all been designed and constructed together with relative temperature monitoring devices which are contained inside their respective structures and such bearings have been installed in new kinds of railway carriages. Further, WO 96 02 903 A discloses a railway bearing assembly according to the preamble of claim 1. In this document a thermal sensor is provided in a bolt, which is to be mounted to an axle of the assembly. However, many railway carriages which are still in circulation are still fitted with a great number of bearings which are monitored by the kinds of monitoring devices described above, and the total or partial replacement of these bearings would result in a considerable financial investment, which would be considered only in extreme cases.

The aim of the present invention is to produce a device for the continuous monitoring of the working temperature of a railway bearing, which besides permitting the reliable monitoring of the working temperature of the bearings themselves, could also be installed in bearings which are already in use in a simple and cost-effective manner, in such a way as to exploit the structural characteristics of these bearings themselves.

According to the present invention there is provided a railway bearing assembly as defined in claim 1.

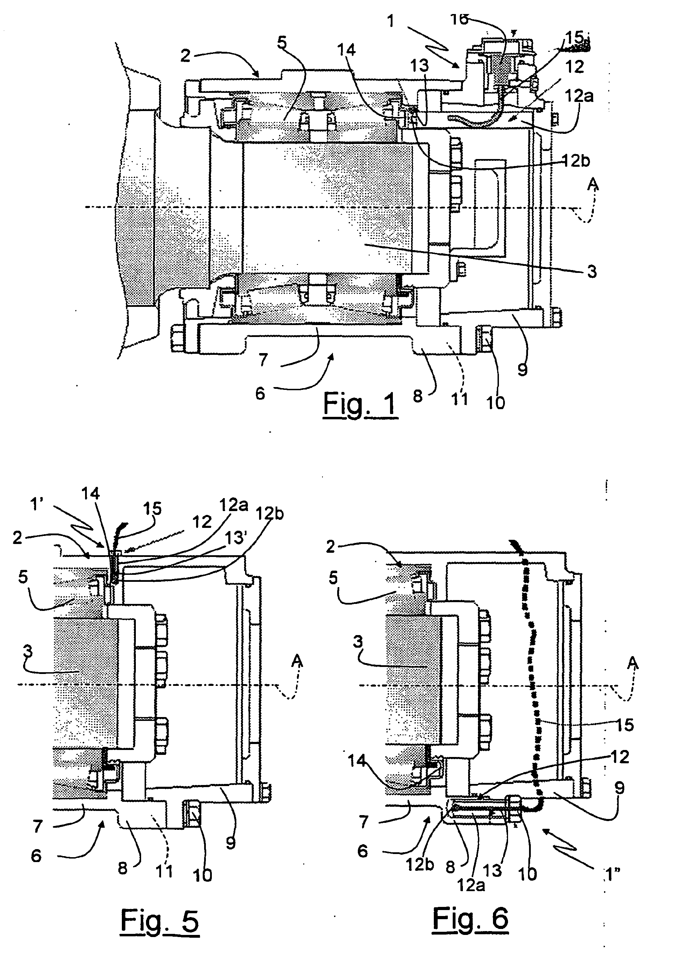

The present invention will now be described with reference to the attached drawings, which illustrate a non-limiting form of embodiment of the present invention, whereby the embodiments of figures 1 and 5 are not in accordance with the invention but retained for illustration, and in which:
- FIGURE 1 illustrates, in section, a railway bearing assembly with a monitoring device;
- FIGURES 2, 3, and 4 illustrate respective examples of the application of the monitoring device shown in FIGURE 1;
- FIGURE 5 illustrates another railway bearing assembly with a monitoring device; and
- FIGURE 6 illustrates, with some parts in section and some parts removed for reasons of clarity, a preferred form of embodiment of the railway bearing assembly according to the present invention.

With reference to FIGURE 1, the number 1 refers to a device in its entirety for the monitoring of the working temperature of a bearing 2.

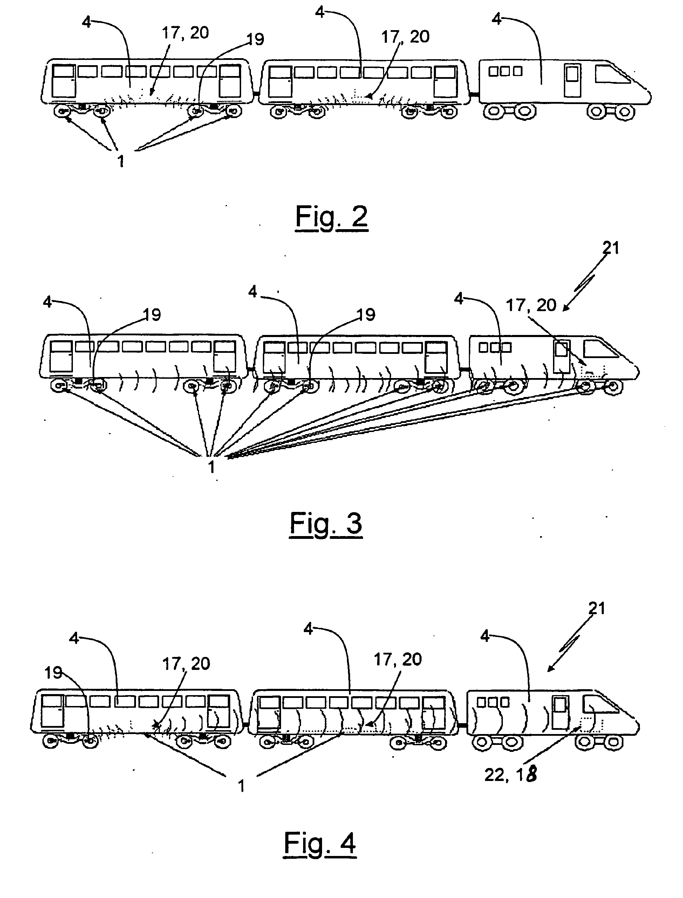

In particular, the bearing 2 is a bearing which has already been installed onto the axle 3 of a railway vehicle 4 (FIGURE 2), and the device 1 is only installed on the bearing 2 at a later stage instead of the bearing 2 itself being completely replaced.

The bearing 2 presents a longitudinal axis A, and comprises a double crown of rollers 5 which is mounted on one end of the axle 3, and an external bushing 6, which in turn comprises a tubular body 7 which is coaxial to the axis A and which presents an open axial end 8, and a lid 9, which is arranged in such a way as to close the end 8, and which is fixed onto the end 8 itself by means of a number of screws 10 (only one of which is illustrated) which are each housed in respective threaded housings 11 which are obtained in the bushing 6 parallel to the axis A.

The device 1 comprises a temperature sensor 12, which is arranged inside a housing 13 which is obtained through the lid 9 , and which is arranged in direct contact with a sealing element 14 of the bearing 2.

The sensor 12 comprises an elongated body 12a which is arranged parallel to the axis A and which is supported by the lid 9, and which is both fed and connected to the outside by means of a wire 15, the connection 16 of which is also integral to the lid 9. The sensor 12 also comprises a transducer 12b for reading the temperature, which is arranged substantially in correspondence to a free end of the body 12a and which is in direct contact with the sealing element 14.

According to the illustration shown in FIGURE 2, the monitoring device 1 also comprises an electronic unit 17 which is arranged on board the vehicle 4 which is provided with a determined number of bearings 2, and the sensor 12 of each bearing 2 is connected to the electronic unit 17 in order to collect the data which is read by the sensor 12 itself.

The connection of each sensor 12 to the unit 17 is by means of a simple electrical connection and is carried out via the wire 15, or alternatively, each sensor 12 comprises a radio or telephone transmitter 19 which is suitable for communicating the data which has been read to a receiver 20 with which the unit 17 is provided.

Whether the connection is carried out by means of an electrical connection or a radio connection, the unit 17 is suitable for processing the data received and for generating any eventual warnings in the case that any anomalies should be detected in the working conditions of the bearings 2 of the respective vehicle 4.

According to the illustrations shown in FIGURES 3 and 4, in a railway conveyance 21 which is defined by vehicles 4 provided with the devices 1, all the sensors 12 are connected to single electronic unit 17 (FIGURE 3), or, alternatively, the units 17 of the individual vehicles 4 are connected to a general electronic receiving unit 22 (FIGURE 4). The unit 22 is suitable for receiving the data which has been read by each sensor 12, and is suitable for processing such data, which can either be used directly by the engine driver or can be transmitted to a determined operational exchange (which is not illustrated) by means of a transmitter 18 with which the unit 22 may also be provided.

According to a form of embodiment which is not illustrated, but which is easily understandable from the above description, each of the units 17 and 22 may be present at the same time on the same conveyance 21, and in this case, the sensors 12 of each vehicle 4 communicate the data which has been read to the unit 17, which becomes a local electronic unit, and which serves to communicate a summary of the data available to the unit 22. This alternative is particularly advantageous in the case of the so-called locked composition conveyances, or rather in those conveyances 22 in which the vehicles 4 are always of the same kind and are always connected to the same locomotive.

The form of embodiment which is illustrated in FIGURE 5 relates to a device 1' which is similar to the device 1, from which the device 1' differs due to the fact that the sensor 12 is defined by a sensor screw which is screwed inside a housing 13' which is obtained through the body 7 of the bushing 6. The body 12a is arranged transverse to the axis A, and the transducer 12b is still directly facing the sealing element 14.

As in the case of the device 1, only a small operation is necessary in the case of the device 1' to obtain the housing 13, 13' in the bearing 2 and, thus, to provide the bearing 2 itself with a device 1, 1' for monitoring the working temperature with notable advantages regarding both safety and cost-effectivess when compared with replacing the bearing 2 with a totally new bearing which is already provided with a monitoring device.

The form of embodiment according to the invention which is illustrated in FIGURE 6 refers, instead, to a device 1" which is similar to the device 1', from which the device 1" differs due to the fact that the sensor screw 12 is directly screwed inside a housing 13", which corresponds to the housing of a screw 10. In this case, the body 12a is arranged parallel to the axis A, and the transducer 12b is however still directly facing the sealing element 14.

The device 1" is even more cost-effective compared to the devices 1 and 1', in that it is sufficient to remove from the bearing 2 one of the fixing screws 10 of the lid 9 of the body 7, and replace such a screw 10 with the sensor screw 12.

It is clear from the above description that any of the monitoring devices 1, 1', 1" described makes it possible to directly monitor the temperature of bearings 2 which have already been installed onto the relative railway axles 3, while avoiding any dangerous situation which might be caused by an unidentified increase in the temperature of a bearing 2 as well as obtaining a continuous flow of information concerning the operating conditions of the bearing 2 itself and thus allowing preventive measures to be taken as and when necessary.

Furthermore, fitting the devices 1, 1', 1" onto bearings which have already been installed is extremely simple and is also very cost-effective, even from the point of view of maintenance.

## Claims

1. A railway bearing assembly, comprising:
a bearing (2), an axle (3), an external bushing (6) and a device (1 ") for the continuous monitoring of the working temperature of the railway bearing (2),
the bearing (2) being already installed on the axle (3), the device (1") comprising a temperature sensor (12) defined by a sensor screw which is screwed inside a housing (13"), wherein said temperature sensor (12) directly faces towards an internal sealing element (14) of the bearing (2),
**characterised by** the fact that the housing (13") is defined by a threaded hole (11) for mounting a lid (9) onto the bushing (6).

2. A railway vehicle (4) which is provided with a determined number of railway bearing assemblies according to claim 1, **characterised by** the fact that it comprises an electronic unit (17, 22) which is arranged on board of the railway vehicle (4); the sensor (12) of each bearing (2) being connected to the electronic unit (17, 22) in order to collect the data which have been read by the sensor (12), whereby the connection is carried out by means of an electrical connection (15) or a radio connection (19, 20).

## Patentansprüche

1. Eisenbahnlageranordnung, umfassend:
ein Lager (2), eine Achse (3), eine äußere Buchse (6) und eine Vorrichtung (1") zur ständigen Überwachung der Arbeitstemperatur des Eisenbahnlagers (2), wobei das Lager (2) bereits auf der Achse (3) installiert ist, wobei die Vorrichtung (1") einen Temperatursensor (12) umfasst, der durch eine Messschraube definiert wird, die in ein Gehäuse (13") geschraubt ist,
wobei der Temperatursensor (12) einem inneren Dichtungselement (14) des Lagers (2) direkt zugekehrt ist, **dadurch gekennzeichnet, dass** das Gehäuse (13") durch eine Gewindebohrung (11) zum Montieren eines Deckels (9) auf der Buchse (6) definiert wird.

2. Eisenbahnfahrzeug (4), das mit einer vorbestimmten Anzahl von Eisenbahnlageranordnungen nach Anspruch 1 versehen ist, **dadurch gekennzeichnet, dass** es eine elektronische Einheit (17, 22) umfasst, die an Bord des Eisenbahnfahrzeugs (4) angeordnet ist; wobei der Sensor (12) jedes Lagers (2) mit der elektronischen Einheit (17, 22) verbunden ist, um die Daten zu sammeln, die von dem Sensor (12) gelesen wurden, wobei die Verbindung durch eine elektrische Verbindung (15) oder eine Funkverbindung (19, 20) durchgeführt wird.

## Revendications

1. Ensemble de palier ferroviaire, comprenant :
un palier (2), un essieu (3), un manchon externe (6) et un dispositif (1") pour la surveillance en continu de la température de travail du palier ferroviaire (2), le palier (2) étant déjà installé sur l'essieu (3), le dispositif (1") comprenant un capteur de température (12) défini par une vis de capteur qui est vissée à l'intérieur d'un boîtier (13"), ledit capteur de température (12) étant tourné directement vers un élément d'étanchéité interne (14) du palier (2), **caractérisé en ce que** le boîtier (13") est défini par un trou fileté (11) pour monter un couvercle (9) sur le manchon (6) .

2. Véhicule ferroviaire (4) muni d'un certain nombre déterminé d'ensembles de paliers ferroviaires selon la revendication 1, **caractérisé en ce qu'**il comprend une unité électronique (17, 22) qui est agencée à bord du véhicule ferroviaire (4) ; le capteur (12) de chaque palier (2) étant connecté à l'unité électronique (17, 22) afin de collecter les données qui ont été lues par le capteur (12), la connexion étant effectuée au moyen d'une connexion électrique (15) ou d'une connexion radio (19, 20).
